# DEMANDE DE BREVET EUROPEEN

(11) **EP 4 311 372 A1**
(43) Date de publication de la demande: **24.01.2024**
(21) Numéro de dépôt: 23186728.4
(22) Date de dépôt: 20.07.2023
(51) Int. Cl.: H04W 84/18, H04W 84/20

(54) **PROCÉDÉ DE FÉDÉRATION DYNAMIQUE D'UNE PLURALITÉ DE RÉSEAUX DE RADIOCOMMUNICATION, PROGRAMME D'ORDINATEUR ET RÉSEAU ASSOCIÉS**

(30) Priorité: 21.07.2022 FR 2207465
(71) Demandeur: THALES, 92400 Courbevoie (FR)
(72) Inventeur: MONTENOT, Jean-Marc, 92622 GENNEVILLIERS CEDEX (FR); SCHOLLER, Franck, 92622 GENNEVILLIERS CEDEX (FR); SOULIE, Antoine, 92622 GENNEVILLIERS CEDEX (FR); ANTONIELLO, Gaëtan, 92622 GENNEVILLIERS CEDEX (FR); KHALIFE, Hicham, 92622 GENNEVILLIERS CEDEX (FR); CONAN, Vania, 92622 GENNEVILLIERS CEDEX (FR)
(74) Mandataire: Lavoix

(57) **Abrégé**

L'invention concerne un procédé (10) de fédération dynamique de réseaux de radiocommunication représentés chacun par un noeud, comprenant au moins les étapes successives suivantes :
- découverte (12) entre les noeuds, chaque noeud diffusant un message de découverte prédéterminé ;
- élection (14) d'un noeud maître parmi les noeuds associés respectivement à chaque réseau, les noeuds distincts dudit noeud maître devenant des noeuds esclaves ;
- mise en oeuvre (16) d'un adressage IP dynamique par ledit noeud maître ;
- construction (18) d'un réseau fédéré par ledit noeud maître, par enrôlement desdits noeuds esclaves après leur authentification par ledit noeud maître ;
- établissement (20) d'au moins un plan de communication entre ledit noeud maître et lesdits noeuds esclaves ;
- configuration (22) dudit réseau fédéré en utilisant ledit au moins un plan de communication.

## Description

La présente invention concerne un procédé de fédération dynamique d'une pluralité de réseaux de radiocommunication.

L'invention concerne également un programme d'ordinateur comportant des instructions logicielles qui, lorsqu'elles sont exécutées par un ordinateur, mettent en oeuvre un tel procédé de fédération dynamique d'une pluralité de réseaux de radiocommunication.

L'invention concerne également un réseau de radiocommunication fédéré via ledit procédé.

Le domaine de l'invention est la fédération d'une pluralité de réseaux de radiocommunication et, plus particulièrement l'obtention d'une configuration de la pluralité de réseaux leur permettant de s'interconnecter et de mettre en place les règles et protocoles régissant l'interconnectivité entre deux réseaux.

Plus précisément, la fédération de réseaux, tactiques (i.e. bulles tactiques sensibles) ou non (e.g. des réseaux de télécommunication civils), permet de connecter au moins deux réseaux distincts (éventuellement à travers un autre réseau sous-jacent) et de configurer ces deux réseaux de manière à ce qu'ils apparaissent comme un seul réseau étendu pour leurs utilisateurs.

Un réseau de radiocommunication est un réseau du type « private mobile radiocommunications » - PMR (« réseau mobile privé de radiocommunication ») ou un réseau du type respectant la norme 3G, 4G, 5G, ou plus, telles que définies par le 3GPP (« 3rd Génération Partnership Project »). Dans ce qui suit, sera plus particulièrement pris pour exemple le cas d'un réseau 4G, mais l'homme du métier sait comment appliquer l'enseignement de la présente description au cas d'une autre norme, notamment la norme 5G.

De manière générale, un réseau de radiocommunication comporte un réseau radio d'accueil (« Radio Access Network - RAN »), un réseau d'infrastructure (« Core Network - CN ») et avantageusement un centre de données, de préférence virtuel (« Software-defined data center - SDDC »).

Les réseaux de radiocommunication peuvent être de différents types, en fonction notamment de leur capacité maximale. Ainsi par exemple, dans un cadre militaire, un réseau de radiocommunication peut relever par exemple d'un premier type, tel qu'un réseau tactique avec une capacité maximum d'une dizaine d'utilisateurs, d'un second type, tel qu'un réseau de données de théâtre avec une capacité maximum de quelques centaines d'utilisateurs, ou d'un troisième type, tel qu'un réseau de commandement avec une capacité maximum de quelques milliers d'utilisateurs.

De plus, les réseaux de radiocommunication peuvent être déployables et/ou mobile. On parle de réseaux de terrain. Par exemple, les réseaux tactiques sont essentiellement des réseaux de terrain.

Les réseaux de radiocommunication (en particulier les réseaux de terrain lorsque leurs zones géographiques de couverture radio viennent à se recouvrir mutuellement) doivent pouvoir être fédérés automatiquement pour offrir par exemple une flexibilité d'usage (pour s'adapter aux déplacements des réseaux de terrain), une simplicité de mise en oeuvre (pour construire un réseau étendu présentant des fonctions avancées comme par exemple le découpage (« slicing ») ou le partage de ressources applicatives des centres de données), une sécurité accrue (pour permettre une interconnexion en sécurité), ou encore une optimisation des usages (pour permettre une répartition de la charge et des ressources applicatives entre réseaux une fois interconnectés).

A l'heure actuelle, il n'existe aucune spécification concernant la fédération de réseaux autre que le standard « Federated Mission Networking » - FMN (ou « réalisation de réseaux de conduite des opérations en coalition»). Or, ce standard ne prend aucunement en compte les aspects d'intégration permettant une prise en compte dynamique des contraintes techniques liées à une interconnectivité entre deux réseaux.

En effet, actuellement, la fédération des réseaux implique généralement une phase de planification en amont et/ou une configuration statique (i.e. non reconfigurable) et/ou un ou des équipement(s) de radiocommunication statique(s).

De plus, lors de l'ajout d'un nouveau réseau à un réseau fédéré existant (i.e. lors de l'extension d'un réseau fédéré existant pour intégrer un nouveau réseau), une nouvelle configuration est requise pour configurer au moins une partie du réseau fédéré existant afin notamment de déclarer les identités du nouveau réseau entrant.

Par exemple, il existe des protocoles d'adressage automatique tel que le protocole RFC 3927 permettant l'adressage réseau sur une plage d'adresses local réseau prédéterminée (169.254.0.0/16) et permet via un protocole de résolution d'adresse ARP (de l'anglais *Address Resolution protocol*) d'annoncer et de détecter les conflits d'adressage IP (de l'anglais *Internet Protocol*) sur le réseau, et ce sans restriction d'obtention d'adresse ce qui est peu sécuritaire.

Le protocole multidiffusion (de l'anglais *multicast*) de configuration dynamique des hôtes DHCP (de l'anglais *Dynamic Host Configuration Protocol*) requiert quant à lui un serveur statique ce qui impose qu'un des réseaux à fédérer porte en permanence (i.e. toujours) ce protocole pour fédérer les autres réseaux (i.e. bulles, par exemple une bulle tactique).

A titre d'alternative aux deux protocoles d'adressage précités, la fédération en grappes (de l'anglais clusters) est également actuellement mise en oeuvre via une configuration manuelle ou via une configuration multidiffusion avec une source multidiffusion statique.

La fédération réseau actuelle basée sur une planification en amont et la configuration statique incluant les identités des réseaux à fédérer, est ainsi basée, au vu des exemples actuels précités basée sur un adressage statique déjà effectué ou mis en oeuvre par un équipement statique. Ces solutions ne permettent donc pas de modification du déploiement réseau après planification, sauf à re-planifier ce qui est chronophage, sont non flexibles et/ou peu sécuritaires, complexes à mettre en oeuvre, parfois manuelles (i.e. mises en oeuvre humainement) et donc sources d'erreur, et ce avec un délai de traitement substantiel propre à impacter la réactivité.

Le but de cette invention est de résoudre ce problème.

A cet effet, l'invention a pour objet un procédé de fédération dynamique d'une pluralité de réseaux de radiocommunication, chaque réseau étant représenté par un noeud, le procédé comprenant au moins les étapes successives suivantes :
- découverte entre les noeuds réseaux de ladite pluralité de réseaux, chaque noeud diffusant un message de découverte prédéterminé ;
- élection d'un noeud maître parmi les noeuds associés respectivement à chaque réseau de ladite pluralité, les noeuds distincts dudit noeud maître élu devenant des noeuds esclaves ;
- mise en oeuvre d'un adressage IP dynamique par ledit noeud maître ;
- construction d'un réseau fédéré par ledit noeud maître, par enrôlement desdits noeuds esclaves après leur authentification par ledit noeud maître ;
- établissement d'au moins un plan de communication entre ledit noeud maître et lesdits noeuds esclaves ;
- configuration dudit réseau fédéré en utilisant ledit au moins un plan de communication.

Ainsi, le procédé selon la présente invention par l'enchainement spécifique des étapes précitées permet de s'affranchir de la planification et de la configuration statique incluant des identités des réseaux à fédérer des solutions actuelles.

Une telle solution permet par ailleurs d'interconnecter dynamiquement, et sans planification, des réseaux entre eux sans requérir un ou des équipements statiques pour leur mise en relation.

Autrement dit, la solution permet de fédérer plusieurs réseaux, c'est-à-dire de mettre en place au moins un plan de communication entre deux noeuds réseaux, exempts, au préalable, d'une connaissance entre eux et d'une configuration d'adressage IP prédéterminée (i.e. les réseaux ne se connaissent pas au préalable).

Suivant d'autres aspects avantageux de l'invention, le procédé de fédération dynamique d'une pluralité de réseaux comprend une ou plusieurs des caractéristiques suivantes, prises isolément ou suivant toutes les combinaisons techniquement possibles :
- ladite étape de découverte est mise en oeuvre en utilisant un protocole de diffusion de type L2 ;
- ladite étape d'élection est mise en oeuvre en utilisant un poids et/ou un âge associé(s) au préalable de manière prédéterminé à chaque noeud réseau de ladite pluralité de réseaux ;
- ladite étape de mise en oeuvre d'un adressage IP dynamique par ledit noeud maître est effectuée au moyen d'un protocole DHCP mis en oeuvre par ledit noeud maître et activé lors de son élection préalable ;
- ladite étape de construction et/ou ladite étape d'établissement est/sont mise(s) en oeuvre en utilisant une connexion sécurisée pour l'authentification de chaque noeud esclave et/ou pour le montage dudit au moins un plan respectivement ;
- ladite authentification est mise en oeuvre au moyen d'un cookie ;
- ledit au moins un plan appartient au groupe comprenant au moins :
   - un plan de contrôle ;
   - un plan de données ;
   - un plan d'orchestration ;
   - un plan de management ;
   - un plan utilisateurs ;
- le procédé comprend en outre une étape de connexion transitive inter-noeud selon laquelle lorsque deux noeuds sont connectés via ledit réseau fédéré, la connexion d'un nouveau noeud à l'un desdits deux noeuds connectés entraine la connexion automatique dudit nouveau noeud à l'autre desdits deux noeuds connectés ;
- le procédé comprend en outre une étape de partage de contexte inter-noeud mise en oeuvre après ou au cours de ladite étape d'établissement d'au moins un plan de communication entre ledit noeud maître et lesdits noeuds esclaves, ledit partage accélérant une élection d'un noeud maître suivant en cas de perte du noeud maître courant, et accélérant la reprise des services assurant la fédération par ledit noeud maître suivant.

L'invention a également pour objet un programme d'ordinateur comportant des instructions logicielles qui, lorsqu'elles sont exécutées par un ordinateur, mettent en oeuvre un procédé de fédération dynamique d'une pluralité de réseaux, tel que défini ci-dessus.

L'invention concerne également un réseau fédéré via ledit procédé.

Ces caractéristiques et avantages de l'invention apparaîtront plus clairement à la lecture de la description qui va suivre, donnée uniquement à titre d'exemple non limitatif, et faite en référence aux dessins annexés, sur lesquels :
- **[****Fig** 1] la figure 1 est un organigramme d'un procédé de fédération dynamique d'une pluralité de réseaux de radiocommunication selon la présente invention ;
- **[****Fig** 2] la figure 2 illustre schématiquement chaque étape du procédé de la figure 1 ;
- **[****Fig. 3****]** la figure 3 illustre la fédération dynamique d'une pluralité de réseaux de radiocommunication en cas de perte d'un noeud représentatif d'un des réseaux du réseau fédéré au moyen du procédé selon la présente invention et en cas d'ajout d'un nouveau noeud entrant dans ledit réseau fédéré ;
- **[****Fig 4****]** la figure 4 illustre l'interconnexion de deux réseaux fédérés distincts via le procédé selon la présente invention.

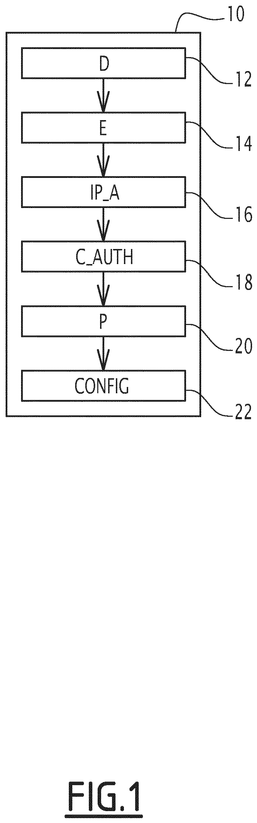

En se référant à la figure 1, le procédé 10 de fédération dynamique d'une pluralité de réseaux de radiocommunication, chaque réseau étant représenté par un noeud, le procédé comprenant au moins les étapes successives suivantes :
- découverte 12 entre les noeuds réseaux de ladite pluralité de réseaux, chaque noeud diffusant un message de découverte prédéterminé ;
- élection 14 d'un noeud maître parmi les noeuds associés respectivement à chaque réseau de ladite pluralité, les noeuds distincts dudit noeud maître élu devenant des noeuds esclaves ;
- mise en oeuvre 16 d'un adressage IP dynamique par ledit noeud maître ;
- construction 18 d'un réseau fédéré par ledit noeud maître, par enrôlement desdits noeuds esclaves après leur authentification par ledit noeud maître ;
- établissement 20 d'au moins un plan de communication entre ledit noeud maître et lesdits noeuds esclaves ;
- configuration 22 dudit réseau fédéré en utilisant ledit au moins un plan de communication.

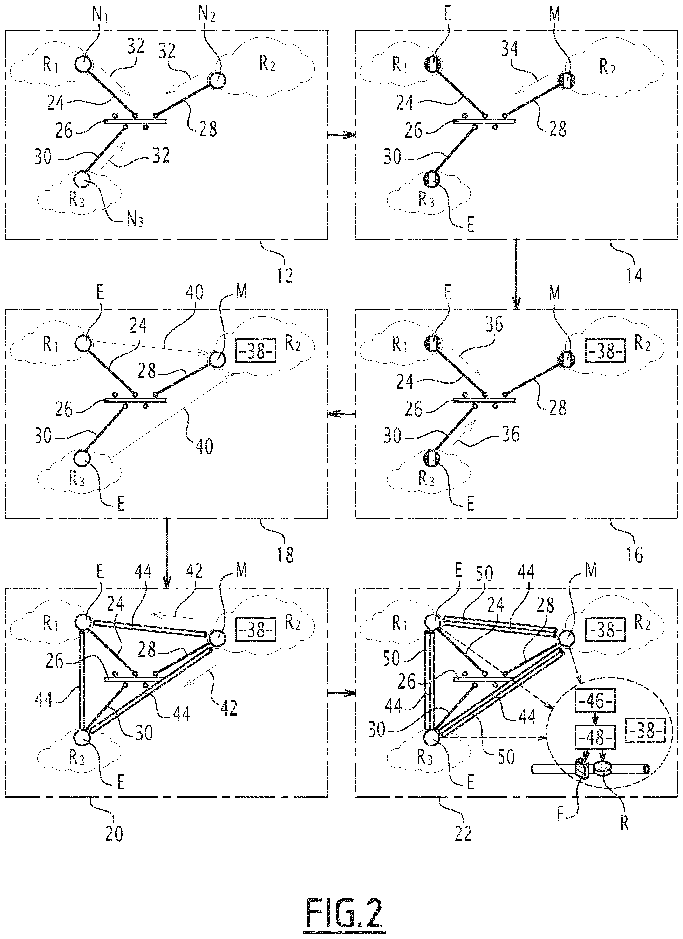

Chacune des étapes précitées dudit procédé 10 est par la suite détaillée en relation avec la figure 2, qui illustre à titre d'exemple la fédération dynamique entre trois réseaux distincts R₁, R₂ et R₃ chacun représentés respectivement par un noeud N₁, N₂, et N₃.

De manière non représentée, chacun des trois réseaux distincts R₁, R₂ et R₃ comporte notamment un réseau d'accès radio ou RAN (de l'anglais *Radio Access Network*), intégrant une pluralité de points d'accès ou eNB (« e-Node B » en 4G). Un eNB permet à un équipement utilisateur UE (de l'anglais *User Equipement*) (i.e. un terminal) de se connecter, au moyen d'une liaison radio, au réseau auquel il est intégré.

Chacun des trois réseaux distincts R₁, R₂ et R₃ comprend en outre un réseau coeur ou EPC (de l'anglais *Evolved Packet Core* en 4G). De manière schématique, l'EPC comprend classiquement une passerelle avec le RAN, une passerelle avec le monde IP et une entité de gestion de la mobilité MME (de l'anglais *Mobility Management Unit*) propre à gérer la signalisation entre les terminaux.

De plus, chacun des trois réseaux distincts R₁, R₂ et R₃ comprend en outre un réseau privé ou SDDC (de l'anglais *Software-defined data center*) qui est un réseau sécurisé comportant plusieurs services virtualisés VM, un élément de routage (i.e. de type routeur), un élément de sécurité de type pare-feu (de l'anglais *Firewall*) pour la communication vers l'extérieur, par exemple selon le protocole IP.

Par ailleurs, chacun des trois réseaux distincts R₁, R₂ et R₃ comprend en outre respectivement au sein de chaque noeud N₁, N₂, et N₃, un orchestrateur de services supervisant un contrôleur de réseau (notamment de type SDN de l'anglais *Software Defined Network*), un contrôleur de sécurité et un contrôleur IT.

Le contrôleur de réseau contrôle les machines de l'EPC pour les configurer selon les commandes reçues de l'orchestrateur de services. Il s'agit par exemple de paramétrer le routage d'un certain type de flux de données d'un utilisateur identifié pour assurer une bande passante.

Le contrôleur IT contrôle les machines du SDDC pour les configurer selon les commandes reçues de l'orchestrateur de services. Il s'agit par exemple d'instancier une application virtuelle particulière en fonction d'un besoin identifié, lui réserver une certaine ressource mémoire et de calcul, éventuellement la décommissionner lorsqu'elle n'est plus utilisée.

Le contrôleur de sécurité contrôle les machines de son réseau, notamment le pare-feu, pour les configurer selon les commandes reçues de l'orchestrateur de services. Il s'agit par exemple de filtrer la circulation des données d'un utilisateur authentifié en fonction de ses privilèges associés à son profil.

L'orchestrateur de services permet donc, à travers les contrôleurs, l'affectation de ressources physiques et/ou virtuelles disponibles en fonction des besoins des utilisateurs (en conformité avec leurs profils respectifs). Pour ce faire, l'orchestrateur de services inclut une logique d'orchestration prédéterminée et détaillée par la suite, la logique d'orchestration prédéterminée définissant la méthode d'élection, le mode distribué (i.e. message inter noeud), le pilotage des éléments, les services et des règles de configuration.

Les ressources physiques comprennent par exemple des capacités de calcul du SDDC, des capacités mémoire de travail du SDDC, des capacités de bande passante sur le réseau, des capacités de translation d'adresse réseau (de l'anglais *Network Address Translation* - NAT) par le pare-feu, etc.

Les ressources virtuelles comprennent par exemple des briques virtualisées correspondant chacune à une application permettant d'effectuer un traitement particulier sur des données spécifiques, tel que par exemple une application d'inspections en profondeur de paquets (de l'anglais *Deep Packet Inspection* - DPI ») par le pare-feu, une application de traitement d'images par le SDDC, ou encore une application de compression d'un flux de données par le réseau.

Dans l'architecture 4G, l'orchestrateur de services est dénommé système de support aux opérations - OSS (de l'anglais *Operations Support System*).

La première étape 12 de découverte du procédé 10 de fédération dynamique d'une pluralité de réseaux de radiocommunication de la figure 1 est représentée sur la figure 2, par la vue également identifiée par la référence 12.

Sur la vue 12 de la figure 2, ladite étape de découverte 12 est mise en oeuvre par chaque noeud N₁, N₂, et N₃. Plus précisément, le réseau R₁ représenté par le noeud N₁ est par exemple relié via une liaison bidirectionnelle 24 à une interface de fédération 26 correspondant par exemple à une connexion en étoile, le réseau R₂ représenté par le noeud N₂ est par exemple également relié via une liaison bidirectionnelle 28 à l'interface de fédération 26, et le réseau R₃ représenté par le noeud N₃ est par exemple relié via une liaison bidirectionnelle 30 à l'interface de fédération 26.

Autrement dit, chacun des noeuds N₁, N₂, et N₃ devant être fédérés (i.e. fédération d'au moins deux noeuds) sont ensuite reliés via une liaison 24, 28 ou 30, de type Ethernet ou LOS (de l'anglais *Line of Sight*) à l'interface de fédération 26.

Lors de ladite étape 12 de découverte de voisinage, le noeud N₁, du réseau R₁, via la liaison 24 diffuse (de l'anglais *broadcast*) un message 32 de découverte prédéterminé à destination de tout noeud représentatif d'un autre réseau également connecté à l'interface de fédération 26, y compris les noeuds N₂ et N₃. Il en est de même pour le noeud N₂, du réseau R₂, via la liaison 28, et pour le noeud N₃, du réseau R₃, via la liaison 30.

Autrement dit, suite à l'établissement des liaisons physiques 24, 28 et 30, l'étape de découverte 12 entre les orchestrateurs de services des noeuds N₁, N₂ et N₃ consiste en l'échange d'un message de présence diffusé (de l'anglais *broadcast*) entre orchestrateurs de services, à travers les liaisons 24, 28 et 30 et l'interface de fédération 26, notamment par mise en oeuvre du protocole de découverte prédéterminé, par exemple en fonction d'une mission exercée au sein dudit réseau.

Autrement dit, la diffusion d'un tel message 32 de découverte revient à la recherche automatique des noeuds de réseaux distincts voisins aptes à recevoir ledit message de découverte prédéterminé du noeud considéré diffusant ledit message. Par définition, les noeuds « au voisinage » du noeud considéré sont propres à recevoir le message de découverte dudit noeud considéré.

Selon une variante optionnelle de réalisation, ladite étape de découverte est mise en oeuvre en utilisant un protocole de diffusion de type L2 (i.e. sur la couche réseau 2 de l'anglais layer 2) correspondant à la couche de réseau utilisée pour transférer des données entre les noeuds N₁, N₂, et N₃ du réseau étendu fédéré).

La deuxième étape 14 d'élection du procédé 10 de fédération dynamique d'une pluralité de réseaux de radiocommunication de la figure 1 est représentée sur la figure 2, par la vue également identifiée par la référence 14.

Ladite étape d'élection 14 vise à élire parmi les noeuds N₁, N₂, et N₃, le noeud maître M du réseau fédéré résultant de la fédération des réseaux R₁, R₂, et R₃ (i.e. réunissant les réseaux R₁, R₂, et R₃). Plus précisément, ladite élection vise à choisir l'orchestrateur de services maître, à savoir tel que représenté sur la figure 2, l'orchestrateur du noeud N₃ représentant le réseau R₃, parmi les orchestrateurs de chacun des noeuds N₁, N₂, et N₃, les noeuds, N₁ et N₂ sur la figure 2, distincts dudit noeud N₃ maître M élu devenant des noeuds esclaves E. Un telle élection est notamment de type L2 (i.e. effectuée sur la couche réseau 2 dite L2 de l'anglais *Layer 2*))

Il est à noter que selon un aspect particulier optionnel, ledit message 32 de découverte, représenté sur la vue 12 associé à l'étape 12 de découverte, comprend un ensemble d'éléments nécessaires à ladite étape subséquente d'élection 14 du procédé selon l'invention.

Selon une variante optionnelle, ladite étape d'élection est mise en oeuvre en utilisant un poids et/ou un âge associé(s) au préalable de manière prédéterminé à chaque noeud réseau de ladite pluralité de réseaux, et indiqué(s) par exemple au sein dudit message de découverte.

Un exemple d'un tel mécanisme d'élection est notamment décrit dans la demande FR 2109229 déposée le 3 septembre 2021 au nom de la Demanderesse.

Suite à ladite élection 14 chaque orchestrateur de services mémorise donc un attribut prenant la valeur « maître » représenté par M sur la figure 2, ou « esclave » représenté par E sur la figure 2, lorsque le réseau de radiocommunication géré par l'orchestrateur de services considéré fait partie d'un réseau fédéré, ou « non défini » lorsque ledit réseau de radiocommunication ne fait pas partie d'un réseau fédéré tel qu'illustré par N₁, N₂, et N₃ sur la vue 12 de la figure 2.

L'orchestrateur de services maître M (par exemple du noeud N₃) a une vision globale du réseau fédéré. Il est donc capable de gérer des services de télécommunication qui s'étendent entre les trois réseaux R₁, R₂, et R₃. Le maître M maintient par conséquent un état global du réseau fédéré résultant de la fédération des réseaux R₁, R₂, et R₃. Il reçoit des requêtes, applique des règles et génère des commandes dont le périmètre concerne le réseau fédéré dans son ensemble. Si des commandes portent sur des services associés au réseau que cet orchestrateur maître gérait avant la fédération (le réseau R₃ dans notre exemple), ces commandes sont transmises aux contrôleurs locaux pour exécution. Si ces commandes portent sur des services associés aux autres réseaux que cet orchestrateur maître ne gérait pas avant la fédération (les réseaux R₁ et R₂ dans notre exemple), ces commandes sont transmises et diffusées (de l'anglais « broadcast ») aux orchestrateurs esclaves E des noeuds R₁ et R₂ respectivement des noeuds N₁ et N₂.

Les orchestrateurs de services qui deviennent des orchestrateurs esclaves E du réseau fédéré se placent dans un mode d'écoute des commandes de l'orchestrateur maître M. Lorsqu'ils reçoivent une commande de l'orchestrateur maître M, ils la relaient vers l'un ou l'autre des contrôleurs locaux (ceux du réseau R₁ ou du réseau R₂ dans notre exemple). L'orchestrateur de services esclave E fonctionne ainsi sous la supervision de l'orchestrateur maître M.

Par ailleurs, l'orchestrateur esclave E remonte vers l'orchestrateur maître M des informations locales permettant à l'orchestrateur maître M de maintenir la partie de l'état du réseau fédérée relatif à cet autre réseau.

La troisième étape 16 de mise en oeuvre d'un adressage IP du procédé 10 de fédération dynamique d'une pluralité de réseaux de radiocommunication de la figure 1 est représentée sur la figure 2, par la vue également identifiée par la référence 16. L'enchainement des étapes de découverte 12, d'élection 14 et d'adressage dynamique 16 est spécifique à la présente invention.

L'adressage IP dynamique 16 est notamment mis en oeuvre par le noeud N₃ maître M précédemment élu. Autrement dit, chaque orchestrateur de noeud emporte avec lui un service d'adressage IP dynamique qui est activé uniquement une fois que ledit orchestrateur de noeud est élu maître, ce qui permet d'éviter une configuration d'adressage IP préalable sur une ou des interface(s) de fédération 26, le plus souvent statique et/ou nécessitant un serveur d'adressage statique (i.e. aucune configuration d'adressage IP n'est nécessaire sur la ou les interface(s) de fédération 26).

Autrement dit, via la présente invention, le service correspondant à l'adressage IP devient virtuel avec une activation conditionnée à l'élection préalable en tant que maître de l'orchestrateur le mettant en oeuvre, si bien que l'élément mettant en oeuvre un adressage IP n'est plus un élément statique du réseau mais un élément dynamique propre à être modifié par élection préalable d'un orchestrateur maitre du réseau.

Un tel adressage IP dynamique virtuel, avec une activation conditionnée à l'élection préalable, en tant que maître, de l'orchestrateur le mettant en oeuvre, permet de s'affranchir de la planification et de la configuration statique incluant des identités des réseaux à fédérer des solutions actuelles. A titre d'exemple, un tel adressage IP dynamique virtuel revient à une allocation dynamique d'adresse IP sur la couche réseau 3 (i.e. L3 de l'anglais *layer 3*).

Selon une variante optionnelle complémentaire, ladite étape 16 de mise en oeuvre d'un adressage IP dynamique par ledit noeud maître est effectuée au moyen d'un protocole DHCP mis en oeuvre par ledit noeud maître M et activé suite à son élection 14 préalable. Autrement dit, tel qu'illustré par la vue 16 sur l'exemple de la figure 2, le noeud N₂ maître M, et plus globalement le réseau R₂ (représenté par le noeud N₂), héberge (i.e. intègre) un module 38 d'adressage DHCP. Via ce module 38 d'adressage DHCP, le noeud N₂ maître M s'octroie une adresse IP sur une interface de fédération et diffuse (i.e. broadcast) régulièrement son identité de maître 34.

Les autres noeuds N₁ et N₃ respectivement représentatifs des réseaux R₁ et R₃ en tant qu'esclaves E diffusent selon le protocole DHCP (i.e. broadcast) selon la flèche 36 une demande d'adressage IP au noeud N₂ maître M, et récupèrent par ce biais chacun leur adressage IP.

La quatrième étape 18 du procédé 10 de fédération dynamique d'une pluralité de réseaux de radiocommunication de la figure 1, porte sur la construction d'un réseau fédéré par ledit noeud maître, et est représentée sur la figure 2, par la vue également identifiée par la référence 18.

Selon cette étape 18, la construction du réseau fédéré est effectuée par enrôlement desdits noeuds esclaves E après leur authentification 40 auprès du noeud maître M. Autrement dit, la flèche 40 de la vue 18 illustre le fait que selon cette étape 18, chacun des noeuds esclaves E se joint ou forme la grappe de réseaux (de l'anglais cluster) fédérée par le noeud maître M de manière sécurisée via une authentification mutuelle des noeuds esclaves E et maîtres M, notamment de type L2 (i.e. sur la couche réseau 2).

Selon une variante optionnelle complémentaire, ladite étape 18 de construction du réseau fédéré utilise une connexion sécurisée pour l'authentification de chaque noeud esclave E.

Selon une variante optionnelle complémentaire, l'authentification, nécessaire à ladite étape 18 de construction du réseau fédéré, est mise en oeuvre au moyen d'un cookie, également appelé magic cookie, correspondant par définition à un identifiant sans signification compréhensible transmis à un programme par un autre programme, pour lui permettre d'accomplir une ou plusieurs tâches de manière sécurisée, notamment au moyen d'une connexion sécurisée via, par exemple, le protocole de sécurité par chiffrement SSL (de l'anglais *Secure Sockets Layer*).

La cinquième étape 20 du procédé 10 de fédération dynamique d'une pluralité de réseaux de radiocommunication de la figure 1, porte sur l'établissement 20 d'au moins un plan de communication entre ledit noeud maître M et lesdits noeuds esclaves E, et est représentée sur la figure 2, par la vue également identifiée par la référence 20.

Selon une variante optionnelle complémentaire, ledit au moins un plan appartient au groupe comprenant au moins :
- un plan de contrôle, correspondant notamment à un plan IP pour la signalisation et les messages inter systèmes destinés au contrôle des équipements et du réseau fédéré ;
- un plan de données correspondant notamment à un plan d'acheminement indiquant où passe tous les paquets de données du réseau (i.e. entre utilisateurs, serveurs, etc.) ;
- un plan d'orchestration, correspondant notamment à un plan de contrôle dédié à l'orchestration (i.e. inter-orchestrateurs entre les noeuds N₁, N₂, et N₃ des réseaux R₁, R₂ et R₃ respectivement, tel que par exemple un plan d'orchestration Est-Ouest) ;
- un plan de management correspondant notamment à un plan IP pour l'administration du réseau (i.e. pour la connexion administrateur par exemple selon le protocole de communication sécurisé SSH (de l'anglais *Secure Shell*);
- un plan utilisateurs, correspondant notamment à un plan de données précité dédié aux utilisateurs.

Selon une variante optionnelle complémentaire, lors de cette cinquième étape 20 d'établissement d'au moins un plan de communication entre le noeud maître M et lesdits noeuds esclaves E, le noeud maître M assure le montage du ou des plan(s) précités inter-noeud du réseau fédéré en utilisant une connexion sécurisée via, par exemple, le protocole de sécurité par chiffrement SSL (de l'anglais *Secure Sockets Layer*).

Selon une variante optionnelle complémentaire, le noeud N₂ maître M du réseau R₂ tel qu'illustré par la figure 2 transmet le contexte 42 de fédération à chaque noeud esclave N₁ et N₃ des réseaux R₁ et R₃ parties au réseau fédéré résultant de la fédération des réseaux R₁, R₂, et R₃.

Le contexte de fédération 42, comprend selon la présente invention, toutes les informations ou données techniques que le noeud N₂ maître M a utilisé pour mettre en place la fédération (liste des noeuds connus et fédérés (comprenant leurs identifiants, leur référence (i.e. nom du noeud) dans le réseau fédéré (i.e. cluster), l'état de fédération, ..., la liste des allocations des adresses IP établie via le module 38 d'adressage DHCP, les politiques de sécurités). Comme on le verra par la suite, un tel partage de contexte de fédération 42 à l'ensemble des noeuds de réseaux participant au réseau fédéré permet par la suite à un noeud esclave de devenir maître en cas de défaillance du maître courant, et ce sans perte de contexte.

Autrement dit, le procédé 10 selon la présente invention, comprend en outre une étape de partage de contexte inter-noeud mise en oeuvre après (selon une variante non représentée sur la figure 2) ou au cours de ladite étape 20 d'établissement d'au moins un plan de communication entre ledit noeud N₂ maître M et lesdits noeuds esclaves E, ledit partage accélérant une élection d'un noeud maître suivant en cas de perte du noeud maître courant, et accélérant la reprise des services assurant la fédération (notamment l'adressage IP dynamique par le noeud maître suivant).

La vue 20 de la figure 2, illustrant l'étape 20 d'établissement d'au moins un plan 44 de communication, illustre également une variante optionnelle complémentaire selon la présente invention à savoir, une étape de connexion transitive inter-noeud selon laquelle lorsque deux noeuds sont connectés via ledit réseau fédéré, la connexion d'un nouveau noeud à l'un desdits deux noeuds connectés entraine la connexion automatique dudit nouveau noeud à l'autre desdits deux noeuds connectés.

Une telle connexion transitive est automatique, par exemple tel qu'illustré sur la figure 2, entre les noeuds N₁ et N₃ esclaves E, notamment du fait que :
- d'une part le noeud N₁ esclave E est connecté au noeud N₂ maitre M qui échange avec lui le contexte de fédération 42 et établi avec lui ledit au moins un plan de communication 44, préférentiellement au moins le plan de contrôle sécurisé, et
- d'autre part le noeud N₃ esclave E est connecté au noeud N₂ maitre M qui échange également avec lui le contexte de fédération 42 et établi avec lui ledit au moins un plan de communication 44, préférentiellement au moins le plan de contrôle sécurisé.

La sixième étape 22 du procédé 10 de fédération dynamique d'une pluralité de réseaux de radiocommunication de la figure 1, porte sur la configuration 22 dudit réseau fédéré en utilisant ledit au moins un plan de communication établi précédemment à l'étape 20, et une telle étape 22 de configuration est représentée sur la figure 2, par la vue également identifiée par la référence 22.

Cette vue 22, illustre notamment la configuration 22 du réseau fédéré d'interconnexion entre les réseaux participants R₁, R₂ et R₃ par utilisation effective du ou des plans précédemment établi(s) lors de l'étape 20, à savoir le plan de contrôle, le plan de données, le plan d'orchestration, le plan de management, le plan utilisateurs.

Comme indiqué précédemment, la mise en oeuvre du procédé selon la présente invention implique la mise en place, en amont de l'interface de fédération 26, des éléments réseaux d'un orchestrateur 46, au sein de chaque noeud réseau N₁, N₂, et N₃, à savoir l'élément de routage (type routeur R), un élément de sécurité (type pare-feu F), un élément de contrôle 48 (i.e. contrôleur de réseau (notamment de type SDN de l'anglais *Software Defined Network*)) incluant une logique d'orchestration (méthode d'élection, le mode distribué (message inter noeud), pilotage des éléments, services et des règles de configuration) afin de configurer le réseau fédéré résultant de la fédération des réseaux R₁, R₂, et R₃ pour utiliser de manière effective le ou les plans précédemment établi(s) lors de l'étape 20, notamment le plan de données 50.

Plus précisément, la configuration 22 du réseau fédéré d'interconnexion entre les réseaux participants R₁, R₂ et R₃ par utilisation effective du ou des plans précédemment établi(s) lors de l'étape 20, consiste à configurer, via l'élément de contrôle 48 (i.e. contrôleur de réseau (notamment de type SDN de l'anglais *Software Defined Network*)) :
- les accès (i.e. à configurer le ou les pare-feu F de chaque réseau participant au réseau fédéré),
- le routage (notamment BGP de l'anglais *Border Gateway Protocol* pour la diffusion des routes à suivre par chaque paquet de données),
- mise en place d'une liaison chiffrée,
- etc.

Autrement dit, l'étape de configuration dudit réseau fédéré en utilisant ledit au moins un plan de communication permet de finaliser l'établissement de « tunnels » de communication sécurisés entre les noeuds N₁, N₂, et N₃ du réseau fédéré (i.e. cluster) notamment sur la couche réseau 3 (i.e. L3 de l'anglais *layer 3*), lesdits tunnels permettant de garantir l'ensemble des flux, leur sécurisation, et la garantie de services inter-noeuds.

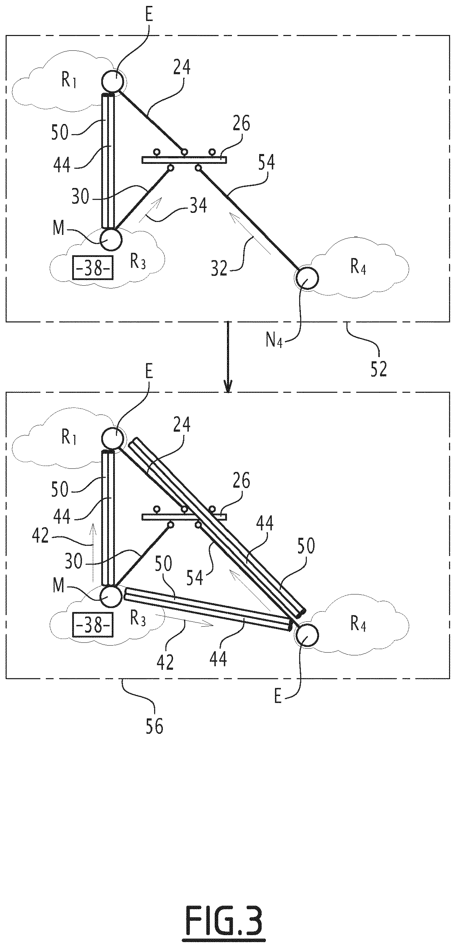

La figure 3 illustre la fédération dynamique d'une pluralité de réseaux de radiocommunication en cas de perte d'un noeud représentatif d'un des réseaux du réseau fédéré au moyen du procédé selon la présente invention et en cas d'ajout d'un nouveau noeud entrant dans ledit réseau fédéré.

Plus précisément, sur la vue 52 de la figure 3, en comparaison aux vues 12, 14, 16, 18 et 22 de la figure 2, le noeud N₂ maître M représentatif du réseau R₂ a été perdu.

Dans ce cas de perte du noeud N₂ maître M courant associé à la figure 2, selon le procédé de l'invention, l'étape d'élection 14 est alors immédiatement réitérée, sans réitération du procédé 10 dans son ensemble (i.e. on passe directement à l'étape 14 d'élection sans « re-découverte »), notamment grâce au partage de contexte 42 inter-noeud mise en oeuvre après ou au cours de ladite étape 20 d'établissement d'au moins un plan de communication illustrée par la figure 2. Selon l'exemple de la vue 52 de la figure 3, en utilisant les informations de contexte précédemment partagé, c'est alors le noeud N₃ du réseau R₃ qui devient alors maitre M du réseau fédéré résultant des réseaux restants R₁ et R₃.

Suite à cette élection, le module 38 d'adressage DHCP hébergé par le noeud N₃ maître M, et plus globalement par le réseau R₃, est activé pour reprendre le cas échéant l'adressage IP dynamique en cas d'entrée d'un nouveau réseau dans le réseau fédéré, et la diffusion (i.e. broadcast) régulière de son identité de maître.

De plus, le noeud N₃ maître M met à jour le contexte 42 (i.e. les politiques de sécurités) et de manière non représentée repartage ce contexte mis à jour à l'ensemble du réseau fédéré et notamment au noeud N₁ du réseau R₁.

Suite à cette élection du noeud N₃ en tant que maître M, la vue 52 de la figure 3 illustre également l'ajout (i.e. l'arrivée) d'un nouveau noeud N₄ représentatif du réseau R₄ qui se relie via une liaison bidirectionnelle 54 à l'interface de fédération 26.

Autrement dit, le nouveau noeud N₄ représentatif du réseau R₄ va entrer dans ledit réseau fédéré résultant des réseaux restants R₁ et R₃, et pour ce faire via la liaison 54 diffuse (de l'anglais *broadcast*) un message 32 de découverte prédéterminé à destination de tout noeud représentatif d'un autre réseau également connecté à l'interface de fédération 26, y compris les noeuds N₁ et N₃.

Ainsi, le nouveau noeud N₄ représentatif du réseau R₄ met en oeuvre l'étape 12 de découverte précitée en se connectant via la liaison 54 à l'interface de fédération 26, tandis que le noeud N₃ maître M diffuse (i.e. broadcast) régulièrement son identité de maître 24.

Suite à cette diffusion, le nouveau noeud N₄ devient esclave E tel que représenté sur la vue 15, et le noeud N₃ maître M met alors en oeuvre l'adressage IP dynamique 16 du nouveau noeud N₄ esclave E, le noeud N₄ esclave E diffusant, notamment selon le protocole DHCP (i.e. broadcast), une demande d'adressage IP au noeud N₃ maître M, et récupérant par ce biais son adressage IP.

Ensuite tel que décrit précédemment, l'orchestrateur du noeud N₃ maître M met en oeuvre les étapes 18 de construction du réseau fédéré par authentification, 20 d'établissement de plans de communication, notamment du plan de contrôle 44 et du plan de données 50, 22 de configuration précitées pour fédérer le nouveau réseau fédéré résultant de la fédération des réseaux R₁, R₃ et R₄.

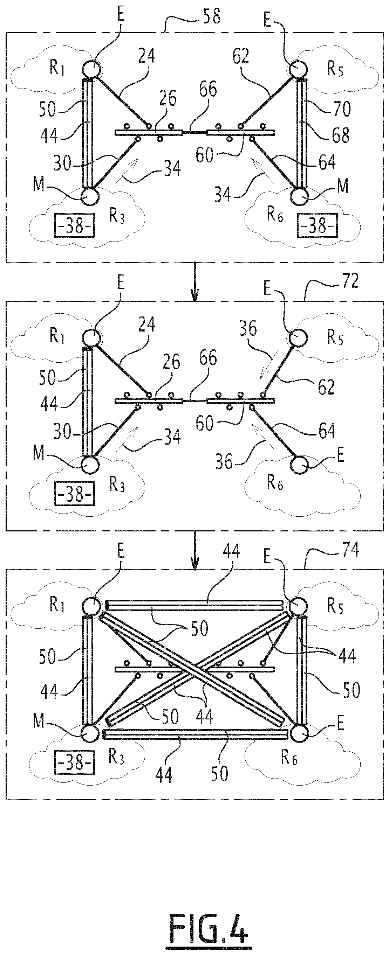

La figure 4 illustre l'interconnexion de deux réseaux fédérés distincts via le procédé selon la présente invention.

Plus précisément, sur la vue 58 de la figure 4, un premier réseau fédéré est illustré, résulte de la fédération des réseaux R₁ et R₃ précités et illustrés auparavant en relation avec les figures 2 et 3, et est fédéré par le noeud N₃ maître M.

Un deuxième réseau fédéré est illustré, résulte de la fédération des réseaux R₅ et R₆, et est fédéré par le noeud N₆ maître M du réseau R₆. Dans de deuxième réseau fédéré, résultant de la fédération des réseaux R₅ et R₆, le noeud N₅ esclave E est relié à l'interface de fédération 60 via une liaison bidirectionnelle 62, tandis que le N₆ maître M du réseau R₆ y est relié via la liaison 64.

Les deux interfaces de connexion 26 du premier réseau fédéré et 60 du deuxième réseau fédéré sont reliées (i.e. raccordés) par une liaison 66.

De plus, auparavant, au sein du deuxième réseau fédéré les plans de contrôle 68 et de données 70 ont été établis et configurés tel que précédemment décrit.

La vue 72 illustre le résultat d'une nouvelle étape d'élection 14 mise en oeuvre suite au raccordement 66 des deux réseaux fédérés, afin d'élire le noeud maître parmi les noeuds N₃ du réseau R₃ et le noeud N₆ du réseau R₆. En particulier, selon l'exemple illustré par la vue 72 de la figure 4, c'est le noeud N₃ du réseau R₃ qui est élu maître M du réseau fédéré étendu résultant des réseaux R₁, R₃, R₅ et R₆, tandis que le noeud N₆ du réseau R₆ devient alors esclave E.

La vue 74 illustre la fédération du réseau fédéré étendu résultant des réseaux R₁, R₃, R₅ et R₆ après mise en oeuvre des étapes 18 de construction du réseau fédéré par authentification, 20 d'établissement de plans de communication, notamment du plan de contrôle 44 et du plan de données 50, 22 de configuration précitées, et application de connexions transitives inter-noeud.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention propose ainsi un mécanisme de découverte de voisinage et d'élection d'un noeud maître auprès de plusieurs noeuds réseaux à fédérer. Selon la présente invention et notamment l'enchainement spécifique des étapes précitées, le noeud maître peut se repositionner sur un autre noeud suivant le changement de contexte opérationnel (e.g. perte de noeud), et emporte avec lui un service d'adressage IP dynamique qui est alors virtuel et n'est plus un élément statique du réseau.

On obtient ainsi une configuration minimum tout en incluant les éléments de sécurité nécessaires à une interconnexion sécurisée et dynamique de réseaux. La solution selon la présente invention permet ainsi de fédérer, c'est-à-dire de mettre en place notamment un plan de données et de contrôle autorisés entre au moins deux noeuds réseaux distincts, exempts au préalable d'une connaissance entre eux et d'une absence de configuration d'adresse IP sur leur lien de fédération.

Avantageusement, la présente solution peut ainsi être utilisée comme une solution « plug and play » sans planification et/ou replanification, basée sur la découverte du voisinage (Ethernet ou LOS) et l'authentification entre voisins, ce qui permet notamment un déploiement de réseau fédéré de type WAN (réseau étendu de l'anglais *Wide Area Network*), ou MAN (réseau métropolitain de l'anglais *Metropolitan Area Network*), ou encore LAN (réseau local de l'anglais *Local Area Network*), car facile à mettre en oeuvre.

Ainsi, un tel procédé de fédération dynamique de réseau facilite le déclenchement dans l'échange opérationnel inter-réseaux, par exemple pour le partage des contextes télécoms dans la fédération de bulle tactique éphémère permettant la mobilité et offrant une flexibilité pour s'adapter à un rythme de manoeuvre tactique.

Autrement dit la présente invention permet de concilier des systèmes distribués (i.e. de type cluster) et la réactivité des réseaux programmables (notamment avec un contrôleur de réseau (notamment de type SDN de l'anglais *Software Defined Network*) avec des exigences de sécurité.

## Revendications

1. Procédé (10) de fédération dynamique d'une pluralité de réseaux de radiocommunication, chaque réseau étant représenté par un noeud, le procédé comprenant au moins les étapes successives suivantes :
- découverte (12) entre les noeuds réseaux de ladite pluralité de réseaux, chaque noeud diffusant un message de découverte prédéterminé ;
- élection (14) d'un noeud maître parmi les noeuds associés respectivement à chaque réseau de ladite pluralité, les noeuds distincts dudit noeud maître élu devenant des noeuds esclaves ;
- mise en oeuvre (16) d'un adressage IP dynamique par ledit noeud maître ;
- construction (18) d'un réseau fédéré par ledit noeud maître, par enrôlement desdits noeuds esclaves après leur authentification par ledit noeud maître ;
- établissement (20) d'au moins un plan de communication entre ledit noeud maître et lesdits noeuds esclaves ;
- configuration (22) dudit réseau fédéré en utilisant ledit au moins un plan de communication.

2. Procédé (10) de fédération dynamique d'une pluralité de réseaux de radiocommunication selon la revendication 1, dans lequel ladite étape de découverte est mise en oeuvre en utilisant un protocole de diffusion de type L2.

3. Procédé (10) de fédération dynamique d'une pluralité de réseaux de radiocommunication selon la revendication 1 ou 2, dans lequel ladite étape d'élection est mise en oeuvre en utilisant un poids et/ou un âge associé(s) au préalable de manière prédéterminé à chaque noeud réseau de ladite pluralité de réseaux.

4. Procédé (10) de fédération dynamique d'une pluralité de réseaux de radiocommunication selon l'une quelconque des revendications précédentes, dans lequel ladite étape de mise en oeuvre d'un adressage IP dynamique par ledit noeud maître est effectuée au moyen d'un protocole DHCP mis en oeuvre par ledit noeud maître et activé lors de son élection préalable.

5. Procédé (10) de fédération dynamique d'une pluralité de réseaux de radiocommunication selon l'une quelconque des revendications précédentes, dans lequel ladite étape de construction et/ou ladite étape d'établissement est/sont mise(s) en oeuvre en utilisant une connexion sécurisée pour l'authentification de chaque noeud esclave et/ou pour le montage dudit au moins un plan respectivement.

6. Procédé (10) de fédération dynamique d'une pluralité de réseaux de radiocommunication selon l'une quelconque des revendications précédentes dans lequel ladite authentification est mise en oeuvre au moyen d'un cookie.

7. Procédé (10) de fédération dynamique d'une pluralité de réseaux de radiocommunication selon l'une quelconque des revendications précédentes, dans lequel ledit au moins un plan appartient au groupe comprenant au moins :
- un plan de contrôle ;
- un plan de données ;
- un plan d'orchestration ;
- un plan de management ;
- un plan utilisateurs.

8. Procédé (10) de fédération dynamique d'une pluralité de réseaux de radiocommunication selon l'une quelconque des revendications précédentes, comprenant en outre une étape de connexion transitive inter-noeud selon laquelle lorsque deux noeuds sont connectés via ledit réseau fédéré, la connexion d'un nouveau noeud à l'un desdits deux noeuds connectés entraine la connexion automatique dudit nouveau noeud à l'autre desdits deux noeuds connectés.

9. Procédé (10) de radiocommunication selon l'une quelconque des revendications précédentes, comprenant en outre une étape de partage de contexte inter-noeud mise en oeuvre après ou au cours de ladite étape d'établissement d'au moins un plan de communication entre ledit noeud maître et lesdits noeuds esclaves, ledit partage accélérant une élection d'un noeud maître suivant en cas de perte du noeud maître courant, et accélérant la reprise des services assurant la fédération par ledit noeud maître suivant.

10. Programme d'ordinateur comportant des instructions logicielles qui, lorsqu'elles sont exécutées par un ordinateur, mettent en oeuvre un procédé de radiocommunication selon l'une quelconque des revendications précédentes.
